(19) Europäisches Patentamt
European Patent Office
Office européen des brevets

(11) **EP 3 380 817 B1**

(12) **FASCICULE DE BREVET EUROPEEN**

(45) Date de publication et mention de la délivrance du brevet:
**04.09.2019 Bulletin 2019/36**

(21) Numéro de dépôt: **16815587.7**

(22) Date de dépôt: **22.11.2016**

(51) Int Cl.:
*G01F 23/14* *(2006.01)*    *G01F 22/02* *(2006.01)*
*G01F 23/18* *(2006.01)*    *F17C 13/00* *(2006.01)*
*F17C 7/00* *(2006.01)*     *F17C 13/02* *(2006.01)*

(86) Numéro de dépôt international:
**PCT/FR2016/053047**

(87) Numéro de publication internationale:
**WO 2017/089696 (01.06.2017 Gazette 2017/22)**

(54) **INSTALLATION DE TRAVAIL DE TYPE OXYACÉTYLÉNIQUE ET PROCÉDÉ DE DÉTERMINATION DE L'AUTONOMIE DE LADITE INSTALLATION**

OXY-ACETYLEN-ARBEITSVORRICHTUNG UND VERFAHREN ZUR BESTIMMUNG DER BETRIEBSZEIT DER BESAGTEN VORRICHTUNG

OXY-ACETYLENE WORK APPARATUS AND METHOD FOR DETERMINING THE OPERATING TIME OF SAID APPARATUS

(84) Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(30) Priorité: **26.11.2015 FR 1561428**

(43) Date de publication de la demande:
**03.10.2018 Bulletin 2018/40**

(73) Titulaire: **L'Air Liquide Société Anonyme pour l'Etude et**
**l'Exploitation des Procédés Georges Claude**
**75007 Paris (FR)**
Etats contractants désignés:
**AL AT BE BG CH CY CZ DE DK EE ES FI GB GR HR HU IE IS IT LI LT LU LV MC MK MT NL NO PL PT RO RS SE SI SK SM TR**

(72) Inventeurs:
• **GOUDALLE, Sébastien**
  **89100 Sens (FR)**
• **QUATTRONE, Michele**
  **1 chemin de la Porte des Loges (FR)**
• **GLEN, Henri**
  **89350 Grandchamp (FR)**

(74) Mandataire: **Debecker, Isabelle Virginie**
**Air Liquide**
**Direction de la Propriete Intellectuelle**
**75, Quai d'Orsay**
**75321 Paris Cedex 07 (FR)**

(56) Documents cités:
**EP-A2- 2 700 467        WO-A1-2015/136207**
**WO-A2-2005/093377    JP-A- H09 166 469**
**US-A- 4 876 903          US-A1- 2002 170 347**
**US-A1- 2008 140 336**

EP 3 380 817 B1

## Description

L'invention concerne une installation de travail de type oxyacétylénique comprenant un premier récipient contenant de l'acétylène et un deuxième récipient d'oxygène, ladite installation permettant de déterminer les quantités résiduelles d'acétylène et d'oxygène dans lesdits premier et deuxième récipients respectivement, ainsi qu'un procédé pour déterminer l'autonomie en quantité résiduelle de gaz ou l'autonomie en temps de ladite installation.

Les procédés de travail oxyacétylénique, en particulier les procédés de soudage, coupage ou brasage, sont exécutés à l'aide de chalumeaux dont l'énergie est produite par la combustion simultanée de deux gaz, l'oxygène ($O_2$) comme gaz comburant et l'acétylène ($C_2H_2$) comme gaz combustible. En utilisation, un récipient d'acétylène et un récipient d'oxygène sont connectées au chalumeau oxyacétylénique dont le principe est de provoquer le mélange de ces deux gaz, lequel mélange une fois enflammé sur une torche déportée permet d'obtenir une flamme d'une température allant typiquement jusqu'à 3 000 °C.

L'oxygène est couramment conditionné dans des récipients de gaz pressurisés, typiquement des bouteilles de gaz ou des cadres de gaz, c'est-à-dire un ensemble de plusieurs bouteilles reliées fluidiquement entre elles. Les bouteilles ou cadres de gaz sont équipés d'un bloc robinet, avec ou sans détendeur intégré, à savoir un robinet simple de type ouvert/fermé avec jauge de pression ou un robinet à détendeur intégré, encore appelé RDI, permettant de contrôler débit et pression du gaz délivré.

Afin de mesurer la pression d'oxygène dans le récipient et de pouvoir déterminer si le récipient contient encore du gaz ou non, il est habituel d'agencer sur le bloc robinet, un dispositif de mesure de pression, typiquement un manomètre à aiguille mobile en rotation.

Un tel dispositif de mesure de pression affiche la pression sur un cadran portant des graduations correspondant à des valeurs de pression en vis-à-vis desquelles vient se placer l'aiguille sous l'effet de la pression du gaz pour indiquer une valeur de pression mesurée.

On connaît également du document WO-A-2015/136207 un manomètre permettant d'opérer une lecture automatisée de la valeur de pression mesurée et évitant ainsi à l'utilisateur de devoir systématiquement observer la valeur de pression correspondant à la graduation désignée par l'aiguille du manomètre. Ce manomètre met en oeuvre un marquage à code bidimensionnel permettant de détecter automatiquement la position angulaire de l'aiguille. La pression résiduelle lue est utilisée comme indicateur du contenu en gaz du récipient.

L'acétylène, en raison de son instabilité, a la particularité d'être conditionné par dissolution dans un solvant, généralement de l'acétone ou du diméthylformamide (DMF), lui-même dispersé dans une masse poreuse remplissant le récipient de gaz. Ce conditionnement permet d'assurer de manière sûre le transport et le stockage de l'acétylène.

Les récipients d'acétylène et d'oxygène d'une installation oxyacétylénique sont généralement équipés de blocs robinet munis de manomètres permettant à un opérateur de connaître les pressions résiduelles de gaz dans les récipients.

Toutefois, dans le cas de l'acétylène, la pression résiduelle mesurée ne reflète pas de manière fiable la quantité d'acétylène restant dans le récipient.

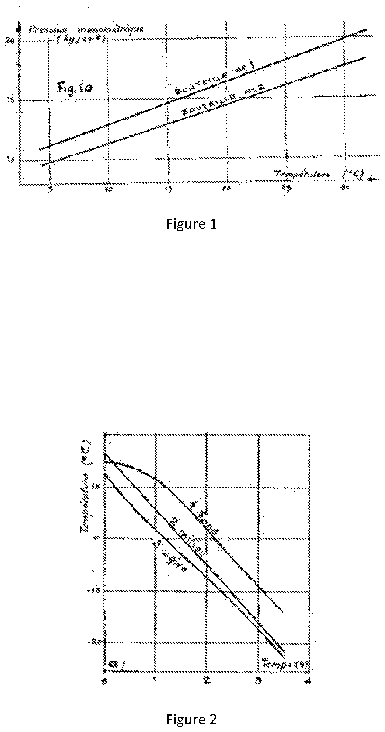

En effet, le coefficient de solubilité de l'acétylène dans l'acétone varie de façon significative en fonction de la température. Ainsi, comme on le voit sur la Figure 1, illustrant la variation de la pression dans des bouteilles d'acétylène en fonction de la température ambiante, le manomètre d'un récipient contenant une quantité donnée d'acétylène affichera une valeur de pression variant typiquement du simple au double si la température ambiante varie de 5 °C à 30 °C environ. On constate que plus la température diminue, plus le coefficient de solubilité de l'acétylène dans l'acétone augmente.

En outre, le passage de l'acétylène dissous en phase gazeuse libre est une réaction endothermique. Ceci implique qu'une bouteille d'acétylène se refroidit au cours de son utilisation. Ce phénomène est illustré en Figure 2, qui représente l'évolution dans le temps des températures mesurées sur différentes zones de la surface extérieure d'une bouteille distribuant de l'acétylène à débit constant. A noter que la baisse de la température dépend du débit d'acétylène distribué par la bouteille. En cas d'utilisation prolongée, il peut même arriver que la distribution d'acétylène soit stoppée du fait de l'effet de réfrigération de la bouteille. Ce phénomène correspond au fait que l'acétylène à basse température reste dissous dans le solvant. L'acétylène ne peut être libéré que si la température de la bouteille augmente et que l'acétylène se retrouve sous forme gazeuse.

Au vu des phénomènes décrits ci-dessus, on comprend donc que l'utilisateur d'une installation de travail oxyacétylénique n'est pas en mesure d'évaluer de façon fiable la quantité résiduelle d'acétylène à partir de la pression mesurée par le manomètre. Il est alors difficile de savoir si l'on dispose d'une quantité suffisante d'acétylène pour effectuer un travail donné ou d'anticiper un éventuel remplacement du récipient d'acétylène.

Le document WO-A-2005/093377 divulgue un système de traitement pour mesurer l'autonomie en temps ou en quantité restante de gaz comprimé d'un récipient. Toutefois, cette solution ne concerne pas un gaz dissous et repose toujours sur des mesures de pression et, par conséquent, ne résout pas le problème particulier de la détermination du contenu d'un récipient d'acétylène, EP-2700467-A2 divulgue une installation de travail de type oxyacétylénique comprenant un premier récipient contenant de l'acétylène et un premier manomètre pour mesurer la pression dans le premier récipient, ledit premier manomètre comprenant un premier cadran et un premier indicateur de pression mobile en rotation par rapport audit premier cadran, un deuxième récipient contenant de l'oxygène et un deuxième manomètre pour mesurer la pression dans le deuxième récipient, ledit deuxième manomètre comprenant un deuxième cadran et un deuxième indicateur de pression mobile en rotation par rapport audit premier cadran.

Un problème technique qui se pose est de pallier tout ou partie des inconvénients mentionnés ci-dessus, en particulier de fournir une installation de travail de type oxyacétylénique permettant de déterminer de manière fiable et reproductible les quantités résiduelles d'acétylène et d'oxygène au sein de ladite installation, qui soit en outre de mise en oeuvre simple, et en particulier aisément adaptable sur des systèmes de mesure de pression à indicateur mobile, ainsi qu'un procédé pour déterminer l'autonomie en quantité résiduelle de gaz ou en temps de ladite installation.

La solution de l'invention est alors une installation de travail de type oxyacétylénique comprenant :

- un premier récipient contenant de l'acétylène,
- un premier manomètre pour mesurer la pression dans le premier récipient, ledit premier manomètre comprenant un premier cadran et un premier indicateur de pression mobile en rotation par rapport audit premier cadran,
- un premier marquage bidimensionnel disposé sur le premier cadran, ledit premier indicateur de pression pouvant occuper plusieurs positions angulaires par rapport audit premier marquage selon la valeur de la pression dans le premier récipient,
- un deuxième récipient contenant de l'oxygène,
- un deuxième manomètre pour mesurer la pression dans le deuxième récipient, ledit deuxième manomètre comprenant un deuxième cadran et un deuxième indicateur de pression mobile en rotation par rapport audit premier cadran,
- un deuxième marquage bidimensionnel disposé sur le deuxième cadran, ledit deuxième indicateur de pression pouvant occuper plusieurs positions angulaires par rapport audit deuxième marquage selon la valeur de la pression dans le deuxième récipient,
- un dispositif de prise d'images configuré pour réaliser des images du premier manomètre et du deuxième manomètre,
- une logique électronique configurée pour traiter lesdites images des premier et deuxième manomètres de manière à déterminer les positions angulaires respectives des premier et deuxième indicateurs de pression par rapport aux premier et deuxième marquages bidimensionnel et à déduire desdites positions angulaires les valeurs de pression mesurées par les premier et deuxième manomètres respectivement,

caractérisée en ce que :

- l'installation comprend en outre un capteur de la température du premier récipient d'acétylène,

la logique électronique étant configurée pour :

- déterminer, en fonction d'une quantité initiale prédéterminée d'acétylène dans le premier récipient (1), de la valeur de la température du premier récipient (1) mesurée par le capteur (6) et de la valeur de la pression mesurée par le premier manomètre (2), la quantité résiduelle d'acétylène dans le premier récipient (1), et
- déterminer, en fonction d'une quantité initiale prédéterminée d'oxygène dans le deuxième récipient (21) et de la valeur de la pression mesurée par le deuxième manomètre (22), la quantité résiduelle d'oxygène dans le deuxième récipient (21).

Selon le cas, l'installation de l'invention peut comprendre l'une ou plusieurs des caractéristiques techniques suivantes :

- le capteur de température est configuré pour mesurer la température de la surface extérieure du premier récipient.
- le capteur de température est configuré pour mesurer la température par contact avec le premier récipient.
- le capteur de température est apposé sur la surface extérieure du premier récipient, de préférence le capteur de température est localisé dans une bandelette adhésive.
- le capteur de température est configuré pour transmettre à distance, de préférence par onde radio, des valeurs de température du premier récipient.
- le capteur de température est du type thermomètre à cristaux liquides.
- le capteur de température est du type thermomètre à infrarouge.
- ladite quantité initiale prédéterminée d'acétylène est encodée dans le premier marquage bidimensionnel, la logique électronique étant configurée pour traiter l'image du premier manomètre de manière à décoder ladite quantité initiale prédéterminée d'acétylène.
- ladite quantité initiale prédéterminée d'oxygène est encodée dans le deuxième marquage bidimensionnel, la logique électronique étant configurée pour traiter l'image du deuxième manomètre de manière à décoder ladite quantité initiale prédéterminée d'oxygène.

- ladite quantité initiale prédéterminée d'acétylène et/ou ladite quantité initiale prédéterminée d'oxygène sont mémorisées dans la logique électronique.
- l'installation comprend un chalumeau comprenant un premier conduit d'alimentation en communication fluidique avec le premier récipient contenant de l'acétylène, un deuxième conduit d'alimentation en communication fluidique avec le deuxième récipient contenant de l'oxygène et une buse reliée fluidiquement auxdits premier et deuxième passages, ladite buse étant configurée de manière à distribuer un débit prédéterminé d'un mélange oxygène-acétylène lorsque le chalumeau est alimenté, via le premier conduit d'alimentation, avec une première pression d'acétylène donnée et lorsque le chalumeau est alimenté, via le deuxième conduit d'alimentation, avec une deuxième pression d'oxygène donnée.
- la logique électronique est configurée pour déterminer une première durée d'autonomie en acétylène en fonction du débit prédéterminé de mélange oxygène-acétylène, de ladite première pression acétylène et de la quantité résiduelle d'acétylène dans le premier récipient, et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient.
- la logique électronique est configurée pour comparer la première durée d'autonomie en acétylène et la deuxième durée d'autonomie en oxygène et déterminer la plus courte desdites première et deuxième durées comme l'autonomie en temps de l'installation.

Par ailleurs, l'invention concerne aussi un procédé de travail, en particulier de coupage, soudage, brasage ou soudo-brasage, du type oxyacétylénique, caractérisé en ce qu'il est mis en oeuvre au moyen d'une installation selon l'invention.

Selon un autre aspect, l'invention concerne en outre un procédé pour déterminer l'autonomie d'une installation selon l'invention, ledit procédé comprenant les étapes suivantes :

a) on réalise une image du premier manomètre et on traite ladite image de manière à déterminer la position angulaire du premier indicateur de pression par rapport au premier marquage bidimensionnel,
b) on déduit de la position angulaire du premier indicateur de pression la valeur de la pression mesurée par le premier manomètre,
c) on réalise une image du deuxième manomètre et on traite ladite image de manière à déterminer la position angulaire du deuxième indicateur de pression par rapport au deuxième marquage bidimensionnel,
d) on déduit de la position angulaire du deuxième indicateur de pression la valeur de la pression mesurée par le deuxième manomètre,
e) on mesure la température du premier récipient,
f) on détermine une quantité initiale prédéterminée d'acétylène,
g) on détermine une quantité initiale prédéterminée d'oxygène,
h) on traite les données obtenues aux étapes b), e) et f) de manière à déterminer la quantité résiduelle d'acétylène dans le premier récipient, et
i) on traite les données obtenues aux étapes d) et g) de manière à déterminer la quantité résiduelle d'oxygène dans le deuxième récipient.

De préférence, au cours de l'étape b), on traite l'image du premier manomètre (2) de manière à décoder une quantité initiale prédéterminée d'acétylène encodée dans le premier marquage bidimensionnel (5) et/ou au cours de l'étape g), on traite l'image du deuxième manomètre (22) de manière à décoder une quantité initiale prédéterminée d'oxygène encodée dans le deuxième marquage bidimensionnel (25).

Ledit procédé peut comprendre en outre une étape de mémorisation au sein de la logique électronique des données suivantes :

- une valeur de débit de mélange oxygène-acétylène distribué par la buse d'un chalumeau,
- une valeur de première pression d'alimentation du chalumeau en acétylène, et
- une valeur de deuxième pression d'alimentation du chalumeau en oxygène,

la logique électronique étant configurée pour déterminer une première durée d'autonomie en acétylène en fonction des valeurs de débit prédéterminé de mélange oxygène-acétylène, de première pression acétylène et de la quantité résiduelle d'acétylène dans le premier récipient, et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient.

Avantageusement, il comprend en outre les étapes suivantes :

- on compare la première durée d'autonomie en acétylène et la deuxième durée d'autonomie en oxygène, et
- on détermine la plus courte desdites première et deuxième durées comme l'autonomie en temps de l'installation.

De préférence, on détermine, en tant que gaz limitant, l'acétylène si la première durée d'autonomie en acétylène est inférieure à la deuxième durée d'autonomie en oxygène, ou l'oxygène si la première durée d'autonomie en acétylène est supérieure à la deuxième durée d'autonomie en oxygène.

L'invention va maintenant être mieux comprise grâce à la description détaillée suivante, faite à titre illustratif mais non limitatif, en référence aux figures annexées parmi lesquelles :

- la Figure 3 représente une vue schématique partielle d'un mode de réalisation d'une installation selon l'invention,
- la Figure 4 représente un deuxième mode de réalisation du premier manomètre d'une installation selon l'invention,
- la Figure 5 illustre l'acquisition de l'image du premier manomètre des Figures 3 ou 4 au moyen d'un téléphone intelligent,
- les Figures 6A, 6B, 6C et 6D illustrent respectivement les affichages de la pression mesurée et de la quantité résiduelle d'acétylène et d'oxygène sur l'écran d'affichage d'un téléphone intelligent, et
- les Figures 7, 8 et 9 illustrent des étapes d'un procédé de détermination de l'autonomie d'une installation selon l'invention.

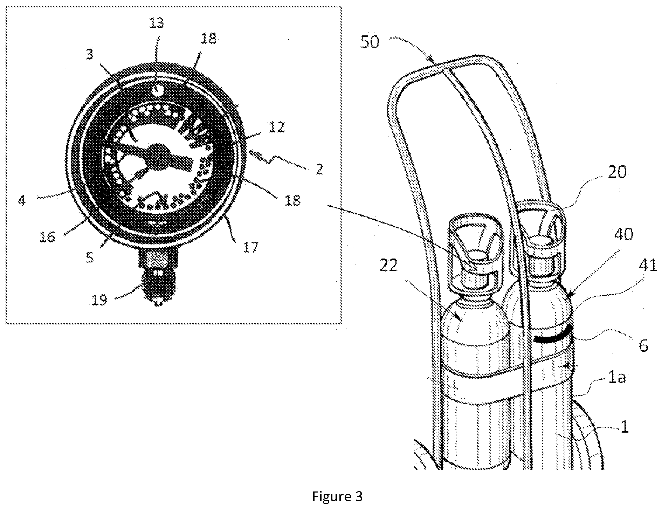

La Figure 3 représente un manomètre 2 pour mesurer la pression dans un premier récipient 1 stockant de l'acétylène.

Par « récipient », on entend une bouteille de gaz ou bien un cadre de gaz, c'est-à-dire un ensemble de plusieurs bouteilles reliées fluidiquement avec une sortie de distribution de fluide.

Par « manomètre », on entend un dispositif apte à et conçu pour indiquer la pression régnant dans un récipient de fluide pressurisé. Le manomètre peut être du type comportant des graduations avec des indications de valeurs de pression ou bien être du type jauge de pression, c'est-à-dire comportant un ou plusieurs symboles représentatifs de la pression.

Dans le cadre de la présente invention, les récipients sont des récipients de fluide sous pression, c'est-à-dire des récipients pressurisés.

La Figure 3 illustre un premier récipient 1 contenant de l'acétylène sous pression, en particulier de l'acétylène à une pression allant jusqu'à 40 bar, faisant partie d'une installation de soudage oxyacétylénique, en association avec un deuxième récipient 22 contenant de l'oxygène sous pression, en particulier de l'oxygène à une pression allant jusqu'à 300 bar. De façon connue en soi, par exemple du document FR-A-2873644, les premier et deuxième récipients 1, 22 peuvent être agencés sur un chariot porte-bouteilles 50 roulant. Une telle installation comprend avantageusement un chalumeau (non illustré) ayant un premier conduit d'alimentation en communication fluidique avec le premier récipient 1 d'acétylène et un deuxième conduit d'alimentation en communication fluidique avec le deuxième récipient 21.

Le chalumeau est équipé d'une buse interchangeable reliée fluidiquement auxdits premier et deuxième passages. Selon le travail à réaliser, l'utilisateur détermine la buse adéquate, c'est-à-dire la buse adaptée pour distribuer un débit prédéterminé de mélange oxygène-acétylène lorsque le chalumeau est alimenté avec une première pression d'acétylène donnée et une deuxième pression d'oxygène donnée.

La description d'un premier manomètre selon l'invention est faite en référence au premier récipient 1 mais s'applique aussi au deuxième récipient 21, qui est équipé d'un deuxième manomètre 22 similaire à celui du manomètre 2, i. e. du type à indicateur mobile et marquage bidimensionnel.

Typiquement, le premier manomètre 2 est fixé, en particulier fixé par vissage via un embout de fixation 19 fileté porté par le boitier 17, sur un bloc robinet, avec ou sans détendeur intégré, avantageusement protégé par un chapeau 20, lui-même monté sur le premier récipient 1 de manière à mesurer la pression du fluide issu dudit récipient 1 et traversant le bloc robinet.

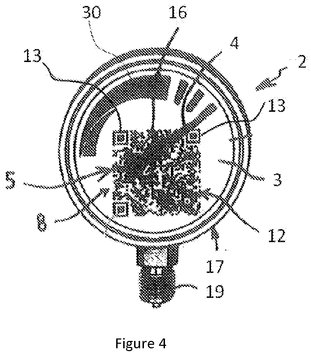

Un tel premier manomètre 2 est formé d'un boitier 17 contenant un mécanisme élastique interne (non visible), par exemple un tube de Bourdon ou un diaphragme, sensible à la pression coopérant avec un premier indicateur de pression 4 mobile en rotation, à savoir généralement une aiguille 4 mobile en rotation autour d'un axe 16 de rotation situé habituellement au centre d'un premier cadran 3 en forme de disque, c'est-à-dire de périphérie circulaire, portant des graduations correspondant à des valeurs de pression, ou bien une ou des indications schématiques de type jauge, telles des symboles 30, comme illustré sur la Figure 4. La prise de pression se fait au niveau de l'embout 19. L'aiguille est de préférence longiligne, avantageusement de couleur contrastée avec le cadran 3, en particulier noire.

Avantageusement, la pression du gaz mesurée par le premier manomètre 2 peut être lue classiquement par l'utilisateur sur le premier cadran 3 étant donné que l'aiguille 4 rotative vient se positionner, sous l'effet de la pression de l'acétylène, vis-à-vis de la graduation correspondant à la valeur de pression. Le premier cadran 3 et l'aiguille 4 sont protégés par une protection 18 transparente fixée au boitier 17, telle une vitre, venant les recouvrir.

Selon l'invention, un premier marquage bidimensionnel 5 est disposé sur le premier cadran 3, le premier indicateur de pression 4 pouvant occuper plusieurs positions angulaires par rapport au premier marquage 5 selon la valeur de la pression dans le premier récipient 1.

Par les termes « disposé sur », on entend que le premier marquage 5 est soit apposé directement sur le premier cadran 3, soit agencé en regard du premier cadran 3, typiquement sur la vitre 18, de sorte qu'il soit aussi possible de visualiser les images superposées de l'aiguille 4 et du premier marquage 5. De préférence, le premier marquage 5 est apposé sur le premier cadran 3, ce qui rend la détermination de la position angulaire de l'aiguille 4 par rapport au premier marquage 5 moins sensible à l'angle de prise de vue de l'image du premier manomètre 2. Le premier marquage bidimensionnel 5 peut être imprimé, collé, sérigraphié ou déposé par toute autre technique.

Le système selon l'invention comprend en outre un dispositif de prise d'images 7 (non illustré sur la Figure 3) configuré pour réaliser une image du premier manomètre 2, ladite image comprenant au moins le premier marquage bidimensionnel 5 et le premier indicateur 4.

Une logique électronique 8 (non illustrée sur la Figure 3) est configurée pour traiter la dite image du premier manomètre 2 de manière à déterminer la position angulaire de le premier indicateur de pression 4 par rapport au premier marquage bidimensionnel 5 et à déduire de ladite position angulaire la valeur de la pression mesurée par le premier manomètre 2. La logique électronique 8 comprend de préférence des moyens de traitement, tel un microprocesseur, et/ou un logiciel stocké au sein de ladite logique électronique 8.

La présente invention se distingue en ce que le système comprend en outre un capteur 6 de la température du premier récipient 1.

Selon l'invention, la logique électronique 8 est configurée pour déterminer, en fonction d'une quantité initiale prédéterminée d'acétylène contenue dans le premier récipient 1, de la valeur de la température du récipient 1 mesurée par le capteur 6 et de la valeur de la pression mesurée par le premier manomètre 2, la quantité résiduelle d'acétylène dans le récipient 1.

Selon un mode de réalisation préféré de l'invention, ladite quantité initiale prédéterminée d'acétylène est encodée dans le premier marquage bidimensionnel 5. La logique électronique 8 est configurée pour traiter l'image du premier manomètre 2 de manière à décoder ladite quantité initiale prédéterminée d'acétylène.

De manière alternative, ladite quantité initiale prédéterminée d'acétylène peut être mémorisées dans la logique électronique 8. Selon le cas, ladite quantité initiale prédéterminée d'acétylène peut faire l'objet d'une mémorisation préalable dans la logique électronique 8, ou bien être transmise à la logique électronique 8 en cours d'utilisation. Par exemple, ladite quantité peut être saisie par l'utilisateur ou bien être obtenue après interrogation d'une base de données externe, par exemple via le réseau internet, et transmission d'une valeur de ladite base de données vers la logique électronique 8. Dans le cadre de l'invention, la quantité initiale prédéterminée d'acétylène, notée Q100-1, correspond à la quantité d'acétylène totale que contient le premier récipient 1 dans un état de remplissage dit « plein », typiquement exprimée en litres (L) d'acétylène. Dit autrement, la quantité initiale Q100-1 correspond à la charge commerciale complète, ou pleine charge, en acétylène du premier récipient 1. La quantité initiale Q100-1 dépend du volume en eau du premier récipient 1 sur lequel est fixé le manomètre 2. A titre d'exemple, on a les correspondances suivantes entre quantité initiale Q100-1 et volume en eau du premier récipient 1 :

- Q100-1 = 400 L pour un volume en eau de 3,35 L,
- Q100-1 = 800 L pour un volume en eau de 5,8 L,
- Q100-1 = 1400 L pour un volume en eau de 9,6 L,
- Q100-1 = 3000 L pour un volume en eau de 22 L,
- Q100-1 = 6000 L pour un volume en eau de 41,5 L,
- Q100-1 = 7000 L pour un volume en eau de 50 L.

On peut donc mémoriser au sein de la logique électronique 8 plusieurs valeurs de quantité initiale prédéterminée d'acétylène, avantageusement sous forme de tables de correspondance avec différentes valeurs de volumes en eau du premier récipient 1.

La logique électronique peut être configurée de sorte que l'utilisateur puisse sélectionner, parmi ces valeurs, le volume en eau du premier récipient 1 utilisé.

Comme expliqué précédemment, le coefficient de solubilité de l'acétylène dans l'acétone, et donc la pression d'acétylène, varient avec la température du premier récipient 1.

En fait, en fonction des caractéristiques connues du premier récipient 1, en particulier la nature de la masse poreuse présente dans le récipient 1, la nature du solvant, il est possible d'établir une relation entre la pression du premier récipient 1 à l'état plein (P100-1, typiquement exprimée en bar) et la température du premier récipient 1. Une telle relation peut être établie par modélisation ou de façon empirique, en procédant à des mesures de pression à différentes températures du premier récipient 1 considéré.

Par exemple, pour un premier récipient 1 d'acétylène donné, on établit la règle de calcul suivante :

$$P100\text{-}1 = (0{,}33 \text{ x } T) + 10,$$

où T est la température de surface du récipient 1, exprimée en degrés Celsius (°C).

Ainsi, pour un premier récipient 1 à T = 20 °C, on a P100-1 = 16,6 bar.

En utilisation, la logique électronique 8 du système selon l'invention détermine la valeur de la pression résiduelle d'acétylène mesurée par le premier manomètre 2, notée P1, typiquement exprimée en bar.

En prenant l'exemple d'une quantité initiale d'acétylène Q100-1 = 800 L décodée du premier marquage 5 par la logique électronique 8, et d'une pression P1 = 12 bar mesurée à 20 °C par le premier manomètre 2, la logique électronique détermine un premier facteur de correction :

$$F1 = P1/\, P100\text{-}1 = 12 \,/\, 16{,}6 = 0{,}723.$$

Ce facteur F1 est appliqué à la quantité initiale Q100-1 pour en déduire la quantité résiduelle d'acétylène Q1 dans le premier récipient 1 :

$$Q1 = F1 \text{ x } Q100\text{-}1 = 578{,}4 \text{ L}.$$

Un avantage du système selon l'invention réside en particulier dans la présence du capteur 6 de température, qui permet de prendre en compte la température de récipient 1 pour déterminer de façon fiable et reproductible la quantité d'acétylène restant effectivement dans le récipient 1. On s'affranchit ainsi du fait que la pression mesurée par le manomètre 2 varie avec la température du récipient, et qu'en outre cette température dépend des conditions d'utilisation du récipient 1. Le système de l'invention fournit donc à l'utilisateur une indication fiable et directe de l'autonomie en quantité du récipient 1, ce qui lui permet d'évaluer si la quantité résiduelle est suffisante pour l'application qu'il vise et éventuellement d'anticiper le remplacement du récipient 1. Le système selon l'invention est également de mise en oeuvre simple et aisément adaptable aux récipients 1 classiques munis de manomètres à indicateur mobile.

Selon l'invention, le dispositif de prise d'images 7 est aussi configuré pour réaliser une image du deuxième manomètre 22 équipant le deuxième récipient 2 d'oxygène. Cette image comprend de préférence au moins le deuxième marquage bidimensionnel 25 et le deuxième indicateur de pression 24.

La logique électronique 8 est configurée pour traiter l'image du deuxième manomètre 22 de manière à déterminer la position angulaire du deuxième indicateur de pression 24 par rapport au deuxième marquage bidimensionnel 25 et à en déduire la valeur de la pression mesurée par le deuxième manomètre 22.

Selon l'invention, la logique électronique 8 est configurée pour déterminer, en fonction d'une quantité initiale prédéterminée d'oxygène et de la valeur de la pression mesurée par le deuxième manomètre 22, la quantité résiduelle d'oxygène contenue dans le deuxième récipient 21.

Selon un mode de réalisation avantageux de l'invention, le deuxième marquage bidimensionnel 25 encode ladite quantité initiale prédéterminée d'oxygène dans le deuxième récipient 21, la logique électronique 8 étant configurée pour traiter l'image du deuxième manomètre 22 de manière à décoder la quantité initiale prédéterminée d'oxygène encodée dans le deuxième marquage bidimensionnel 25 .

De manière alternative, ladite quantité initiale prédéterminée d'oxygène peut être mémorisées dans la logique électronique 8. Selon le cas, elle peut être mémorisée au préalable dans la logique électronique 8, ou bien être transmise à la logique électronique 8 en cours d'utilisation. Par exemple, elle peut être saisie par l'utilisateur au sein de la logique électronique 8 ou bien être obtenue à partir d'une base de données externe, par exemple via le réseau internet.

Comme déjà expliqué, l'oxygène est stocké classiquement dans le deuxième récipient 21 sous la forme d'un gaz comprimé. La quantité de gaz stockée ne varie donc pas ou quasiment pas avec la température, si bien qu'on peut déduire la quantité résiduelle d'oxygène de la pression résiduelle de fluide mesurée dans le deuxième récipient 21, notée P2.

En prenant l'exemple d'une quantité initiale d'oxygène Q100-2 = 1000 L, d'une pression du deuxième récipient 21 à l'état plein P100-2 = 200 bar, et d'une pression P2 = 150 bar mesuré par le deuxième manomètre 22, la logique électronique 8 détermine un deuxième facteur de correction :

$$F2 = P2/\, P100\text{-}2 = 150 \,/\, 200 = 0{,}75.$$

Ce facteur F2 est appliqué à la quantité initiale Q100-2 pour en déduire la quantité résiduelle d'oxygène Q2 dans le deuxième récipient 21 :

$$Q2 = F2 \text{ x } Q100\text{-}2 = 750 \text{ L}.$$

Avantageusement, la logique électronique 8 comprend des moyens de mémorisation aptes à mémoriser des instructions de calcul, par exemple conformément à des règles de calcul telle que décrites ci-dessus, et des moyens de calcul, encore appelés électronique de traitement, tel un microprocesseur, aptes à traiter les données mesurées conformément auxdites instructions de calcul, de manière à déterminer les quantités résiduelles d'acétylène et d'oxygène. De préférence, la logique électronique 8 contient un logiciel comprenant un ou plusieurs programmes informatiques aptes à transmettre des instructions de calcul auxdits moyens de calcul.

Les caractéristiques ci-dessus permettent de déterminer l'autonomie en quantité de gaz de l'installation selon l'invention.

En outre, il peut être avantageux de connaître l'autonomie en temps de l'installation, c'est-à-dire le temps pendant lequel il reste suffisamment d'acétylène et d'oxygène à distribuer pour réaliser l'opération de travail souhaitée.

Pour ce faire, la logique électronique 8 est configurée pour déterminer une première durée d'autonomie en acétylène en fonction du débit prédéterminé de mélange oxygène-acétylène, de ladite première pression acétylène et de la quantité résiduelle d'acétylène dans le premier récipient 1, et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient 2.

Selon un mode de réalisation préféré de l'invention, la logique électronique 8 peut être configurée pour opérer les calculs détaillés dans l'exemple qui suit.

En considérant l'exemple ci-dessus, la quantité résiduelle d'acétylène dans le premier récipient 1 est Q1 = 578,4 L et la quantité résiduelle d'oxygène dans le deuxième récipient 21 est Q2 = 750 L. Si l'utilisateur souhaite opérer un procédé de soudage avec un chalumeau muni, de façon connue en soi, d'une buse configurée pour distribuer un débit D = 1000 L/h de mélange oxygène-acétylène, les paramètres définis pour obtenir un tel débit sont une première pression d'alimentation du chalumeau en acétylène de 1,5 bar et une deuxième pression d'alimentation du chalumeau en oxygène de 4 bar. Ces pressions correspondent en fait aux pressions partielles d'acétylène et d'oxygène dans le mélange oxygène-acétylène, pour une pression totale de 1,5 + 4 = 5,5 bar.

On peut alors calculer un débit partiel d'acétylène dans le mélange égal à :

$$(1{,}5 \text{ x } 1000) \text{ / } 5{,}5 = 273 \text{ L/h environ},$$

et de la même façon un débit partiel d'oxygène dans le mélange égal à 727 L/h environ.

Ces débits conduisent à une première durée d'autonomie en acétylène égale à :

Q1 / 273 = 578,4 / 273 = 2,12 h = 2 heures et 7 minutes environ,

Et à une deuxième durée d'autonomie en oxygène égale à :

Q2 / 727 = 750 / 727 = 1,03 h = 1 heure et 2 minutes environ.

Le tableau ci-dessous montre différentes valeurs de débits partiels calculées pour plusieurs buses de chalumeau configurées pour distribuer des débits prédéterminés de mélange oxygène-acétylène pour des pressions d'alimentation du chalumeau en acétylène et en oxygène données.

De préférence, la logique électronique 8 est en outre configurée pour comparer la première durée d'autonomie en acétylène et la deuxième durée d'autonomie en oxygène. La durée la plus courte desdites première et deuxième durées est déterminée comme l'autonomie en temps de l'installation oxyacétylénique. Dans l'exemple ci-dessus, l'autonomie en temps indiquée à l'utilisateur est donc de 1 heure et 2 minutes.

Il peut aussi être avantageux de déterminer quel gaz est limitant pour le fonctionnement de l'installation et de l'indiquer à l'utilisateur. Dans l'exemple ci-dessus, c'est le deuxième récipient d'oxygène qui a la durée d'autonomie la plus courte. L'oxygène est donc le gaz limitant de l'installation.

Tableau

| Débit de mélange oxygène - acétylène (L/h) | Pression d'alimentation du chalumeau en acétylène (bar) | Pression d'alimentation du chalumeau en oxygène (bar) | Débit partiel d'acétylène (L/h) | Débit partiel d'oxygène (L/h) |
|---|---|---|---|---|
| 3000 | 1,8 | 5 | 780 | 2220 |
| 1000 | 1,5 | 4 | 273 | 727 |
| 400 | 1,3 | 2,6 | 132 | 268 |

(suite)

| Débit de mélange oxygène - acétylène (L/h) | Pression d'alimentation du chalumeau en acétylène (bar) | Pression d'alimentation du chalumeau en oxygène (bar) | Débit partiel d'acétylène (L/h) | Débit partiel d'oxygène (L/h) |
|---|---|---|---|---|
| 315 | 1,1 | 2,3 | 100,8 | 214,2 |
| 250 | 1,0 | 2 | 82,5 | 167,5 |
| 160 | 0,8 | 1,6 | 52,8 | 107,2 |
| 100 | 0,7 | 1,4 | 33 | 77 |
| 63 | 0,6 | 1,2 | 20,8 | 42,2 |
| 40 | 0,3 | 0,6 | 13,2 | 26,8 |

Dans le cadre de l'invention, la valeur du débit de mélange oxygène-acétylène peut par exemple être saisie au sein de la logique électronique 8 par l'utilisateur. De façon alternative, la logique électronique 8 peut être configurée pour stocker plusieurs valeurs types de débit, l'utilisateur pouvant sélectionner parmi ces valeurs le débit qu'il souhaite mettre en oeuvre dans son procédé.

De préférence, le débit prédéterminé de mélange oxygène-acétylène est compris entre 30 et 3500 L/h. La pression d'acétylène dans le premier passage de fluide est comprise entre 0,2 et 2 bar et la pression d'oxygène dans le deuxième passage de fluide est comprise entre 0,5 et 6 bar. En fait, les débits sont associés à la taille des récipients. Typiquement, on atteint 3000 L/h pour des récipients de 50 L et 40 L/h pour des récipients de 3.35 L.

De préférence, le système selon l'invention comprend au moins un afficheur 9 apte à et conçu pour afficher au moins une information choisie parmi : la valeur de la pression P mesurée par le manomètre 2, la valeur de la température T du récipient 1, la quantité résiduelle d'acétylène Q1 dans le premier récipient 1, la quantité résiduelle d'oxygène Q1 dans le deuxième récipient 21, l'autonomie en temps de l'installation, une indication du gaz limitant.

En outre, le système selon l'invention peut comprendre au moins une interface homme/machine 10, de préférence une interface de type écran tactile, configurée pour la saisie par l'utilisateur et/ou pour la mémorisation au sein de la logique électronique 8 d'au moins une donnée choisie parmi : la valeur de la température T du récipient 1 mesurée par le capteur 6, une valeur prédéterminée D de débit de mélange oxygène-acétylène.

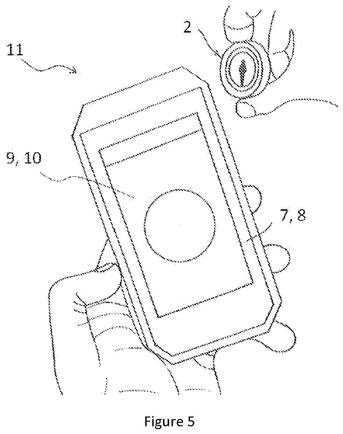

La Figure 5 schématise un mode de réalisation avantageux de l'invention dans lequel le dispositif de prise d'images 7, typiquement une caméra, la logique électronique 8, l'afficheur 9 et l'interface tactile 10 sont localisés au sein d'un terminal de lecture 11 du type téléphone intelligent ou « *smartphone* » en anglais. D'autres types de terminaux de lecture 11 appropriés peuvent être utilisés, par exemple une tablette numérique ou analogue.

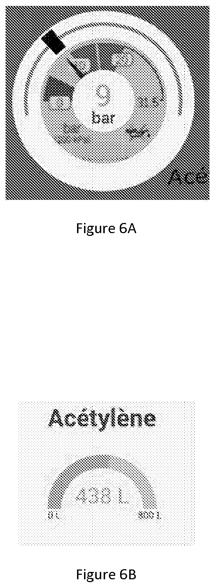

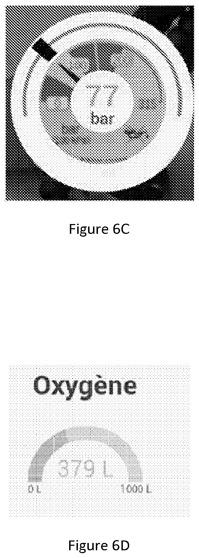

A titre d'exemples, les Figures 6A à 6D illustrent des informations affichés par un afficheur 9 du type écran de téléphone. L'utilisateur a ainsi accès directement aux informations décodées et calculées au moyen de l'installation selon l'invention, telles la valeur de la pression résiduelle P1 dans le récipient 1 obtenue par traitement de l'image du premier manomètre 2 (Figure 6A), la quantité résiduelle d'acétylène Q1 dans le premier récipient 1 (Figure 6B), la pression résiduelle P2 dans le deuxième récipient 21 obtenue par traitement de l'image du deuxième manomètre 2 (Figure 6C), la quantité résiduelle d'oxygène Q2 dans le deuxième récipient 21 (Figure 6D). Ces informations peuvent être affichées en association avec d'autres éléments graphiques, par exemple un élément graphique du type jauge ou niveau indiquant à l'utilisateur l'état de remplissage des récipients 1, 21.

Dans le cadre de l'invention, le capteur 6 de température est avantageusement configuré pour mesurer la température de la surface extérieure 1a du récipient 1. En effet, étant donné le caractère hautement inflammable de l'acétylène, l'agencement de capteurs de grandeurs physique à l'intérieur du récipient est à proscrire.

De préférence, le capteur 6 de température est configuré pour mesurer la température par contact avec le récipient 1. Par exemple, le capteur 6 peut être du type thermomètre à résistance. La captation de température par contact permet des mesures de températures plus reproductibles. A noter que les mesures de températures sont d'autant plus précises que le capteur est proche du robinet de la bouteille, ce robinet étant protégé par le chapeau 20 sur la Figure 3. En particulier, agencer le capteur 6 entre le robinet et l'ogive 40 de la bouteille permet des mesures de températures précises du fait de l'absence de masse poreuse dans cette zone de la bouteille.

Selon un mode de réalisation préféré de l'invention, le capteur 6 de température est du type thermomètre à cristaux liquides. Typiquement, ce type de thermomètre comprend une partie sensible constituée de cristaux liquides dont la couleur varie selon la température. Il offre les avantages d'être compact, léger et peu couteux. Ce type de thermomètre présente aussi l'avantage de fonctionner sans pile et de ne pas nécessiter d'alimentation électrique, l'existence d'une différence de potentiel électrique au voisinage de la bouteille étant à proscrire pour des raisons de sécurité. Un autre avantage réside dans le temps de réponse suffisamment rapide de ces thermomètres, de l'ordre de quelques secondes.

De préférence, le capteur 6 de température est apposé sur la surface extérieure 1a du récipient 1. Un tel positionnement permet de réaliser des mesures de températures fiables et reproductibles et de tenir compte des variations de la température de la bouteille au cours de son utilisation. Avantageusement, le capteur 6 est agencé sur la surface plane du corps de la bouteille, le plus près possible de l'ogive 40, de préférence au niveau du rayon 41 délimitant le corps et l'ogive. Un autre avantage est que le capteur 6 se trouve au niveau des yeux de l'utilisateur, ce qui en facilite la lecture.

De préférence, le capteur 6 de température se présente sous la forme d'une bandelette adhésive, comme schématisé en Figure 3, protégée par du plastique souple. La bandelette présente une série de graduations correspondant chacune à des valeurs de température différentes. La température mesurée s'affiche par changement de couleur d'une zone située au niveau d'une graduation donnée. La bandelette s'étend de préférence selon une direction transverse à l'axe de la bouteille, comme illustré en Figure 3.

De façon alternative, le capteur 6 de température peut être du type thermomètre à infrarouge. Ce type de thermomètre mesure à distance la température du récipient 1 en mesurant son rayonnement dans le domaine de l'infrarouge.

Selon une autre variante, le capteur de température est agencé sur le récipient 1 et configuré pour assurer une transmission sans fil, de préférence par ondes radio, de la valeur de température mesurée vers la logique électronique 8. La logique électronique 8 comprend alors un organe de réception de données configuré pour recevoir et traiter la valeur de température du récipient 1. Avantageusement, le capteur 6 met en oeuvre le standard de communication dit « *bluetooth* » pour la transmission des valeurs de températures mesurées. La logique électronique 8 est de préférence agencée au sein d'un dispositif 11 de lecture numérique, tel un téléphone intelligent ou une tablette numérique, qui disposent d'organes de réception d'onde radio, en particulier d'organes de réception fonctionnant en standard de communication de données type *bluetooth.* L'utilisation d'un capteur à transmission sans fil est avantageuse puisqu'au lieu de nécessiter une lecture visuelle par l'utilisateur, il permet d'automatiser la lecture de la température nécessaire pour la détermination de la quantité d'acétylène.

Les Figures 3 et 4 représentent deux modes de réalisation d'un premier ou deuxième manomètre à marquage bidimensionnel selon l'invention. Ces manomètres, ainsi que leur marqueur bidimensionnel, ont globalement la même architecture et fonctionnent de la même manière. Les caractéristiques ci-dessous sont décrites en référence au premier marqueur mais s'appliquent aussi au deuxième marqueur.

Le premier marquage bidimensionnel 5 est apte à encoder, i. e. contenir, une ou plusieurs informations, de préférence des données spécifiques au récipient 1. De préférence, le premier marquage bidimensionnel 5 comprend un motif de codage comprenant des éléments codants 12 contenant une ou plusieurs données.

Avantageusement, le premier marquage bidimensionnel 5 comprend des formes géométriques 12, de préférence un ensemble de coniques répartis sur au moins une partie de la périphérie du premier cadran 3, de préférence un premier cadran 3 de forme circulaire, comme illustré en Figure 3. La disposition et le nombre de cette pluralité de formes 12 encodent une ou plusieurs données. Par exemple, les données peuvent être codées sous forme de disques, centrés ou décentrés les uns par rapport aux autres.

Par ailleurs, le premier marquage bidimensionnel 5 peut comprendre au moins un élément de repérage 13, à savoir ici un (ou des) élément graphique, servant de position de référence permettant de positionner le premier indicateur de pression 4 dans l'espace.

Dans le mode de réalisation de la Figure 3, les formes géométriques 12 du premier marquage bidimensionnel 5 sont des disques, de couleur noire et de couleur blanche, éventuellement grisés, répartis sur la périphérie du cadran 3. Typiquement, le premier marquage bidimensionnel 5 est ici de type code « *bleam* ». Ce type de code présente l'avantage de pouvoir être lu, i. e. détecté, et décodé même dans des conditions perturbées, par exemple lorsque l'image est réalisée en sur ou sous-exposition de lumière, lorsque la prise d'image est réalisée à distance ou de biais, en présence d'un défaut de mise au point ou d'un manque de stabilité, dans des conditions d'occultation partielle ...

On remarque aussi la présence d'un seul élément de repérage 13, situé ici en haut du cadran 3, servant de position de référence permettant de positionner l'indicateur de pression 4, c'est-à-dire l'aiguille rotative, sur le cadran et de déterminer ainsi une position angulaire de le premier indicateur de pression 4 par rapport à cet élément de repérage 13 pour en déduire une pression de gaz. La présence d'un tel élément de repérage 13 est particulièrement importante pour automatiser la lecture d'une valeur de pression s'affichant sur le premier cadran 3.

Cet élément de repérage 13 est ou comprend une forme géométrique, par exemple un point, un trait, un carré ou autre. Ici, il s'agit d'un point en forme de disque. Comme on le voit, dans ce mode de réalisation, l'élément de repérage 13 est distinct des formes géométriques 12 encodant la quantité résiduelle Q100-1.

Dans le mode de réalisation de la Figure 4, les formes géométriques 12 formant le marquage bidimensionnel 5 sont des carrés de petite taille et de couleur noire qui sont répartis sur un fond de forme carrée et de couleur contrastée par rapport aux couleurs du fond du cadran, typiquement un carré de couleur blanche ou noire. Typiquement, le code bidimensionnel 9 est ici de type code QR.

Comme on le voit, dans ce mode de réalisation de la Figure 4, le premier cadran 3 porte plusieurs éléments de repérage 13, à savoir des éléments graphiques, incorporés aux formes géométriques 12 formant le premier marquage bidimensionnel 5, c'est-à-dire qu'il fait partie des formes géométriques 12 formant le premier marquage bidimensionnel 5.

Plus précisément, les formes géométriques 12 définissent ou dessinent une forme générale carrée formant le premier marquage bidimensionnel 5 de type code QR, et trois éléments de repérage 13 graphiques sont positionnés approximativement dans trois des angles de la forme générale carrée formant le marquage bidimensionnel 5.

Afin de repérer automatiquement la position de l'aiguille 4 sur le cadran 3, on peut utiliser l'un ou plusieurs de ces éléments de repérage 13 qui peuvent chacun servir de position de référence servant à positionner l'aiguille 4 dans l'espace. Les éléments de repérage 13 illustrés en Figure 4 sont de forme carrée.

Avantageusement, le premier marquage bidimensionnel 5 peut encoder d'autres informations données correspondant par exemple à une référence de bouteille, un nom d'utilisateur, un grade d'acétylène, un lien vers un site internet, un nom de fournisseur ou une provenance, une date de péremption, une date de ré-épreuve de la bouteille 1, un numéro de téléphone à contacter en cas de problème ou tout autre information utile.

Ainsi, grâce au système de l'invention, on peut désormais opérer une mesure de la pression affichée par les manomètres 2, 22 et, de façon automatisée, l'autonomie en quantité de gaz ou en temps selon le procédé décrit ci-après.

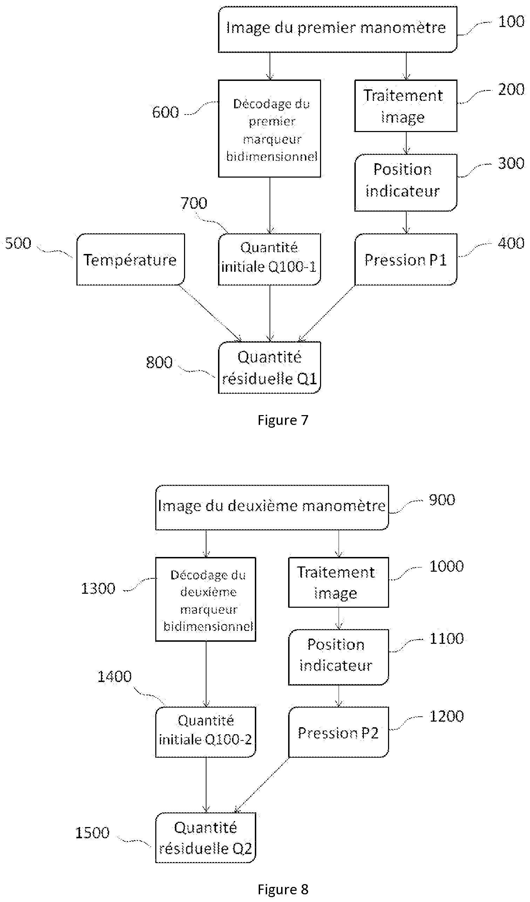

Les étapes du procédé selon l'invention sont illustrées sur la Figure 7.

Tout d'abord, on réalise (étape 100) une image du premier manomètre 2 des Figures 3 ou 4, en particulier du premier cadran 3 dudit manomètre 2, ladite image comprenant au moins le premier marquage bidimensionnel 5 et l'indicateur de pression 4 positionné sur ou en regard dudit premier marquage 5.

Optionnellement, le procédé selon l'invention peut comprendre, préalablement à la réalisation de ladite image, une étape d'affichage par l'afficheur 9 d'un signal, message ou tout autre moyen adéquat invitant l'utilisateur à positionner le dispositif de prise d'images 7 devant la manomètre 2.

De préférence, l'image réalisée inclut aussi au moins un élément de repérage 13. En effet, la présence du ou des éléments de repérage 13 sur le cadran 3 permet de connaitre précisément la position et l'orientation du premier marquage bidimensionnel 5 et/ou de l'aiguille 4 au sein de ladite image.

L'image du premier manomètre 2 est traitée (étape 200) pour détecter la position angulaire du premier indicateur de pression 4 par rapport au premier marquage bidimensionnel 5 (étape 300). On déduit ensuite de la position angulaire du premier indicateur de pression 4 la valeur de la pression mesurée par le premier manomètre 2 (étape 400).

Optionnellement, le procédé selon l'invention peut comprendre une étape de confirmation par l'utilisateur du caractère vraisemblable de la pression déduite à l'étape 400. Ainsi, si la pression déduite ne semble pas correcte, par exemple anormalement basse ou élevée, l'utilisateur peut le signaler. Une nouvelle image du manomètre 2 peut être réalisée.

Selon l'invention, le procédé comprend en outre une étape 500 de mesure de la température du premier récipient 1 au moyen du capteur 6 de température. De préférence, la valeur de température mesurée est lue par l'utilisateur, puis saisie et/ou mémorisée au sein de la logique électronique 8. Dans le cas d'un capteur de température 6 à cristaux liquides, l'utilisateur lit la valeur de température puis la saisit manuellement, de préférence via l'afficheur 9 faisant aussi office d'interface homme/machine 10 de type tactile.

L'image du premier manomètre 2 réalisée à l'étape 100 est également traitée (étape 600) pour en décoder (étape 600) les données encodées dans le marquage bidimensionnel 5, en particulier ladite quantité initiale prédéterminée Q100-1 lorsque celle-ci est encodée dans le marquage bidimensionnel 5 (étape 700). Optionnellement, d'autres données telles qu'énoncées précédemment et contenues dans le marquage 5 peuvent également être décodées dans le cadre du procédé selon l'invention.

Enfin, on traite les données obtenues aux étapes 400, 500, 700 de manière à déterminer la quantité résiduelle Q1 d'acétylène dans le premier récipient 1, conformément aux explications déjà fournies pour décrire l'installation selon l'invention.

Les étapes de traitement décrites ci-dessus sont appliquées de manière similaire au deuxième récipient 2 d'oxygène, comme illustré en Figure 8, mis à part la mesure de température du récipient qui n'est pas nécessaire pour l'oxygène.

Lesdites étapes sont typiquement mises en oeuvre par la logique électronique 8, de préférence au moyen d'un microprocesseur et d'un logiciel.

De préférence, le procédé selon l'invention comprend une étape de mémorisation au sein de la logique électronique 8 d'au moins une règle de calcul telle que mentionnée plus haut.

De préférence, la valeur prédéterminée de débit de mélange oxygène-acétylène est saisie par l'utilisateur en fonction de l'application visée, de préférence via l'afficheur 9 faisant aussi office d'interface homme/machine 10 de type tactile.

Avantageusement, le procédé selon l'invention comprend une étape de mémorisation au sein de la logique électronique 8 des données suivantes : une valeur de débit de mélange oxygène-acétylène distribué par la buse d'un chalumeau (étape 1600), une valeur de première pression d'alimentation du chalumeau en acétylène, et une valeur de deuxième pression d'alimentation du chalumeau en oxygène. Les valeurs de première et deuxième pression d'alimentation peuvent être mémorisées par l'utilisateur, ou bien être sélectionnées et mémorisées automatiquement par la logique électronique 8 en fonction de la valeur de débit de mélange choisie, à partir d'une base de données préalablement mémorisée (étape 1700).

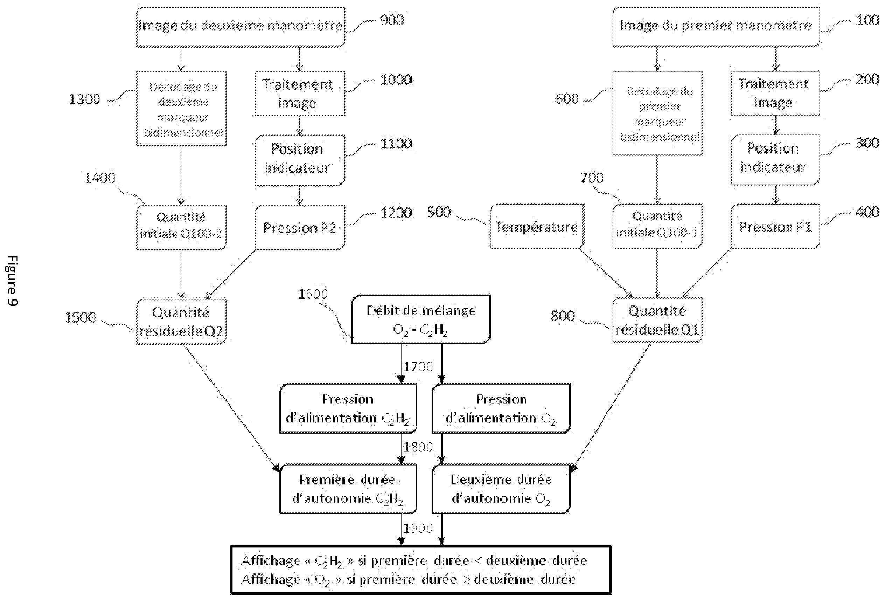

Selon le mode de réalisation du procédé illustré en Figure 9, la logique électronique 8 est configurée pour déterminer (étape 1800) une première durée d'autonomie en acétylène en fonction des valeurs de débit prédéterminé de mélange oxygène-acétylène, de première pression acétylène et de la quantité résiduelle d'acétylène dans le premier récipient 1 et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient 21. Le mode de calcul de ces durées est avantageusement celui décrit dans l'exemple ci-dessus.

Une fois la première durée d'autonomie en acétylène et la deuxième durée d'autonomie en oxygène déterminées, on les compare de manière à déterminer l'autonomie en temps de l'installation, qui correspond à la plus courte desdites première et deuxième durées.

Le procédé peut alors comprendre une étape d'affichage du gaz limitant de l'installation, par exemple une indication « O$_2$ » ou « C$_2$H$_2$ », c'est-à-dire le gaz dont le récipient sera épuisé en premier.

A noter que la position de l'aiguille 4, qui pourrait se superposer à l'information Q100-1 encodée dans le premier (ou deuxième) marquage bidimensionnel 5, ne gène pas le décodage de l'information Q100-1 grâce à l'utilisation de techniques de reconnaissance d'image et de reconstruction des données qui sont propres à la technologie d'encodage du marquage 5 et connues par tout homme du métier.

De plus, la détection du marquage bidimensionnel 5 permet aussi la connaissance précise de la position et de l'orientation du marquage bidimensionnel 5 dans l'image du manomètre 2, et permet de sélectionner aisément au sein de l'image, une zone d'intérêt incluant l'aiguille 4 et de reconstituer son positionnement dans l'espace, c'est-à-dire son positionnement angulaire sur le cadran 3.

Par exemple, mais non exhaustivement, le procédé selon l'invention peut mettre en oeuvre des techniques de traitement d'images et décodage, notamment un ou des algorithmes de reconnaissance d'image et de reconnaissance de forme, tels que décrits dans le document WO-A-2015/136207.

Comme illustré sur la Figure 5, l'acquisition de l'image brute du cadran 4 du manomètre 1 est préférentiellement opérée à l'aide d'un dispositif 11 de lecture numérique, en particulier un dispositif incluant une caméra, comme un téléphone intelligent ou une tablette numérique, équipé d'un caméra et mettant en oeuvre une application ou module de lecture de code bidimensionnel, notamment de QR code ou *bleam* code, par exemple module de lecture de code Manatee Works Barcode Scanne SDK fonctionnant sous environnement Android™, IOs, or Windows Mobile.

Par exemple, les étapes du procédé susdécrit ont été mises en oeuvre, sur un téléphone intelligent fonctionnant sous environnement Android™, et à l'aide d'un logiciel s'appuyant sur une librairie de traitement d'images, tel que OpenCV™.

La présente invention est particulièrement utile pour déterminer l'autonomie en temps et/ou en quantité de gaz d'une installation de travail oxyacétylénique, par exemple un travail du type coupage, soudage, brasage, soudo-brasage, préchauffage avant soudage, chauffage pour formage ou traitement thermique.

Grâce à l'invention, l'utilisateur de l'installation oxyacétylénique est en mesure de déterminer si les quantités d'acétylène et d'oxygène au sein du poste sont suffisantes à l'application qu'il vise ou s'il faut procéder au remplacement d'une ou des récipients de gaz.

Exemples

L'efficacité de l'invention a été démontrée en procédant à des essais de détermination des quantités résiduelles d'acétylène et d'oxygène dans une installation du type oxyacétylénique commercialisé sous la référence OXYFLAM 1000.

Le premier récipient 1 était une bouteille commercialisée par la société AIR LIQUIDE sous la référence S05, de quantité initiale en acétylène égale à 800 L, et le deuxième récipient 21 était une bouteille commercialisée par la société AIR LIQUIDE sous la référence S05 de quantité initiale en oxygène égale à 1000 L. Les récipients 1, 21 étaient chacun munis de robinets de type RDI.

Après lecture et décodage des manomètres 2 et 22 équipant respectivement les récipients 1, 21, des quantités résiduelles en acétylène et en oxygène de respectivement 438 L (à 20 °C) et de 385 L ont été déterminées, la détermination de la quantité résiduelle d'acétylène mettant en oeuvre une mesure de température du récipient 1 conformément à l'invention.

Le procédé visé était le soudage autogène d'un matériau de 2 mm d'épaisseur pour lequel un débit de 250 L/h est recommandé, la pression d'alimentation du chalumeau en acétylène étant réglée à une valeur de 1 bar et la pression d'alimentation du chalumeau en oxygène à une valeur de 2 bar.

Dans ces conditions, l'oxygène a été déterminé comme étant le gaz limitant de l'installation, avec une deuxième durée d'autonomie en oxygène égale à 2 heures et 19 minutes, correspondant donc à l'autonomie en temps de l'installation.

**Revendications**

1. Installation de travail de type oxyacétylénique comprenant :

   - un premier récipient (1) contenant de l'acétylène,
   - un premier manomètre (2) pour mesurer la pression dans le premier récipient (1), ledit premier manomètre (2) comprenant un premier cadran (3) et un premier indicateur de pression (4) mobile en rotation par rapport audit premier cadran (3),
   - un premier marquage bidimensionnel (5) disposé sur le premier cadran (3), ledit premier indicateur de pression (4) pouvant occuper plusieurs positions angulaires par rapport audit premier marquage (5) selon la valeur de la pression dans le premier récipient (1),
   - un deuxième récipient (21) contenant de l'oxygène,
   - un deuxième manomètre (22) pour mesurer la pression dans le deuxième récipient (21), ledit deuxième manomètre (22) comprenant un deuxième cadran (23) et un deuxième indicateur de pression (24) mobile en rotation par rapport audit premier cadran (23),
   - un deuxième marquage bidimensionnel (25) disposé sur le deuxième cadran (23), ledit deuxième indicateur de pression (24) pouvant occuper plusieurs positions angulaires par rapport audit deuxième marquage (25) selon la valeur de la pression dans le deuxième récipient (21),
   - un dispositif de prise d'images (7) configuré pour réaliser des images du premier manomètre (1) et du deuxième manomètre (2),
   - une logique électronique (8) configurée pour traiter lesdites images des premier et deuxième manomètres (1, 2) de manière à déterminer les positions angulaires respectives des premier et deuxième indicateurs de pression (4) par rapport aux premier et deuxième marquages bidimensionnel (5, 25) et à déduire desdites positions angulaires les valeurs de pression mesurées par les premier et deuxième manomètres (2, 22) respectivement,

   **caractérisée en ce que** :

   - l'installation comprend en outre un capteur (6) de la température du premier récipient (1) d'acétylène,

   la logique électronique (8) étant configurée pour :

   - déterminer, en fonction d'une quantité initiale prédéterminée d'acétylène dans le premier récipient (1), de la valeur de la température du premier récipient (1) mesurée par le capteur (6) et de la valeur de la pression mesurée par le premier manomètre (2), la quantité résiduelle d'acétylène dans le premier récipient (1), et
   - déterminer, en fonction d'une quantité initiale prédéterminée d'oxygène dans le deuxième récipient (21) et de la valeur de la pression mesurée par le deuxième manomètre (22), la quantité résiduelle d'oxygène dans le deuxième récipient (21).

2. Installation selon la revendication précédente, **caractérisée en ce que** le capteur (6) de température est configuré pour mesurer la température de la surface extérieure (1a) du premier récipient (1).

3. Installation selon l'une des revendications précédentes, **caractérisée en ce que** le capteur (6) de température est configuré pour mesurer la température par contact avec le premier récipient (1).

4. Installation selon l'une des revendications précédentes, **caractérisée en ce que** le capteur (6) de température est configuré pour transmettre à distance, de préférence par onde radio, des valeurs de température du premier récipient (1).

5. Installation selon l'une des revendications précédentes, **caractérisée en ce que** le capteur (6) de température est apposé sur la surface extérieure du premier récipient (1), de préférence le capteur (6) de température est localisé dans une bandelette adhésive.

6. Installation selon l'une des revendications précédentes, **caractérisée en ce que** le capteur (6) de température est du type thermomètre à cristaux liquides.

**7.** Installation selon l'une des revendications 1 ou 2, **caractérisée en ce que** le capteur (6) de température est du type thermomètre à infrarouge.

**8.** Installation selon l'une des revendications précédentes, **caractérisée en ce que** ladite quantité initiale prédéterminée d'acétylène est encodée dans le premier marquage bidimensionnel (5), la logique électronique (8) étant configurée pour traiter l'image du premier manomètre (2) de manière à décoder ladite quantité initiale prédéterminée d'acétylène.

**9.** Installation selon l'une des revendications précédentes, **caractérisée en ce que** ladite quantité initiale prédéterminée d'oxygène est encodée dans le deuxième marquage bidimensionnel (25), la logique électronique (8) étant configurée pour traiter l'image du deuxième manomètre (22) de manière à décoder ladite quantité initiale prédéterminée d'oxygène.

**10.** Installation selon l'une des revendications 1 à 7, **caractérisée en ce que** ladite quantité initiale prédéterminée d'acétylène et/ou ladite quantité initiale prédéterminée d'oxygène sont mémorisées dans la logique électronique (8).

**11.** Installation selon l'une des revendications précédentes, **caractérisée en ce qu'**elle comprend un chalumeau comprenant un premier conduit d'alimentation en communication fluidique avec le premier récipient (1) contenant de l'acétylène, un deuxième conduit d'alimentation en communication fluidique avec le deuxième récipient (21) contenant de l'oxygène et une buse reliée fluidiquement auxdits premier et deuxième passages, ladite buse étant configurée de manière à distribuer un débit prédéterminé d'un mélange oxygène-acétylène lorsque le chalumeau est alimenté, via le premier conduit d'alimentation, avec une première pression d'acétylène donnée et lorsque le chalumeau est alimenté, via le deuxième conduit d'alimentation, avec une deuxième pression d'oxygène donnée.

**12.** Installation selon la revendication précédente, **caractérisée en ce que** la logique électronique (8) est configurée pour déterminer une première durée d'autonomie en acétylène en fonction du débit prédéterminé de mélange oxygène-acétylène, de ladite première pression acétylène et de la quantité résiduelle d'acétylène dans le premier récipient (1), et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient (2).

**13.** Installation selon la revendication précédente, **caractérisée en ce que** la logique électronique (8) est configurée pour comparer la première durée d'autonomie en acétylène et la deuxième durée d'autonomie en oxygène et déterminer la plus courte desdites première et deuxième durées comme l'autonomie en temps de l'installation.

**14.** Procédé pour déterminer l'autonomie d'une installation selon l'une des revendications 1 à 13, ledit procédé comprenant les étapes suivantes :

a) on réalise une image du premier manomètre (2) et on traite ladite image de manière à déterminer la position angulaire du premier indicateur de pression (4) par rapport au premier marquage bidimensionnel (5),
b) on déduit de la position angulaire du premier indicateur de pression (4) la valeur de la pression mesurée par le premier manomètre (2),
c) on réalise une image du deuxième manomètre (22) et on traite ladite image de manière à déterminer la position angulaire du deuxième indicateur de pression (24) par rapport au deuxième marquage bidimensionnel (25),
d) on déduit de la position angulaire du deuxième indicateur de pression (24) la valeur de la pression mesurée par le deuxième manomètre (22),
e) on mesure la température du premier récipient (1),
f) on détermine une quantité initiale prédéterminée d'acétylène,
g) on détermine une quantité initiale prédéterminée d'oxygène,
h) on traite les données obtenues aux étapes b), e) et f) de manière à déterminer la quantité résiduelle d'acétylène dans le premier récipient (1), et
i) on traite les données obtenues aux étapes d) et g) de manière à déterminer la quantité résiduelle d'oxygène dans le deuxième récipient (21).

**15.** Procédé selon la revendication 14, **caractérisé en ce qu'**au cours de l'étape b), on traite l'image du premier manomètre (2) de manière à décoder une quantité initiale prédéterminée d'acétylène encodée dans le premier marquage bidimensionnel (5) et/ou au cours de l'étape g), on traite l'image du deuxième manomètre (22) de manière à décoder une quantité initiale prédéterminée d'oxygène encodée dans le deuxième marquage bidimensionnel (25).

**16.** Procédé selon l'une des revendications 14 ou 15, **caractérisé en ce qu'**il comprend en outre une étape de mémorisation au sein de la logique électronique (8) des données suivantes :

- une valeur de débit de mélange oxygène-acétylène distribué par la buse d'un chalumeau,
- une valeur de première pression d'alimentation du chalumeau en acétylène, et
- une valeur de deuxième pression d'alimentation du chalumeau en oxygène,

la logique électronique (8) étant configurée pour déterminer une première durée d'autonomie en acétylène en fonction des valeurs de débit prédéterminé de mélange oxygène-acétylène, de première pression acétylène et de la quantité résiduelle d'acétylène dans le premier récipient (1), et pour déterminer une deuxième durée d'autonomie en oxygène en fonction du débit prédéterminé de mélange oxygène-acétylène, de la dite deuxième pression d'oxygène et de la quantité résiduelle d'oxygène dans le deuxième récipient (2).

**17.** Procédé selon la revendication 16, **caractérisé en ce qu'**il comprend en outre les étapes suivantes :

- on compare la première durée d'autonomie en acétylène et la deuxième durée d'autonomie en oxygène, et
- on détermine la plus courte desdites première et deuxième durées comme l'autonomie en temps de l'installation.

**18.** Procédé selon la revendication 17, **caractérisé en ce qu'**on détermine en tant que gaz limitant :

- l'acétylène si la première durée d'autonomie en acétylène est inférieure à la deuxième durée d'autonomie en oxygène, ou
- l'oxygène si la première durée d'autonomie en acétylène est supérieure à la deuxième durée d'autonomie en oxygène.

**Patentansprüche**

**1.** Oxy-Acetylen-Arbeitsanlage, umfassend:

- einen ersten Behälter (1), der Acetylen enthält,
- ein erstes Manometer (2), um den Druck im ersten Behälter (1) zu messen, wobei das erste Manometer (2) eine erste Skala (3) und eine erste Druckanzeige (4) umfasst, die mit Bezug auf die erste Skala (3) drehbeweglich ist,
- eine erste zweidimensionale Markierung (5), die auf der ersten Skala (3) angeordnet ist, wobei die erste Druckanzeige (4) mehrere Winkelpositionen mit Bezug auf die erste Markierung (5) gemäß dem Druckwert im ersten Behälter (1) einnehmen kann,
- einen zweiten Behälter (21), der Sauerstoff enthält,
- ein zweites Manometer (22), um den Druck im zweiten Behälter (21) zu messen, wobei das zweite Manometer (22) eine zweite Skala (23) und eine zweite Druckanzeige (24) umfasst, die mit Bezug auf die erste Skala (23) drehbeweglich ist,
- eine zweite zweidimensionale Markierung (25), die auf der zweiten Skala (23) angeordnet ist, wobei die zweite Druckanzeige (24) mehrere Winkelpositionen mit Bezug auf die zweite Markierung (25) gemäß dem Druckwert im zweiten Behälter (21) einnehmen kann,
- eine Bilderfassungsanlage (7), die konfiguriert ist, um Bilder des ersten Manometers (1) und des zweiten Manometers (2) zu erzeugen,
- eine elektronische Logik (8), die konfiguriert ist, um die Bilder des ersten und zweiten Manometers (1, 2) derart zu bearbeiten, dass die jeweiligen Winkelpositionen der ersten und zweiten Druckanzeige (4) mit Bezug auf die erste und zweite zweidimensionale Markierung (5, 25) bestimmt und dass von den Winkelpositionen die vom ersten bzw. zweiten Manometer (2, 22) gemessenen Druckwerte abgeleitet werden,

**dadurch gekennzeichnet, dass**:

- die Anlage weiter einen Temperatursensor (6) des ersten Acetylenbehälters (1) umfasst,

wobei die elektronische Logik (8) konfiguriert ist, um:

- in Abhängigkeit von einer vorbestimmten anfänglichen Acetylenmenge im ersten Behälter (1), vom Temperaturwert des ersten Behälters (1), gemessen vom Sensor (6), und vom Druckwert, gemessen vom ersten Manometer (2), die Acetylenrestmenge im ersten Behälter (1) zu bestimmen, und

- in Abhängigkeit von einer vorbestimmten anfänglichen Sauerstoffmenge im zweiten Behälter (21) und vom Druckwert, gemessen vom zweiten Manometer (22), die Sauerstoffrestmenge im zweiten Behälter (21) zu bestimmen.

**2.** Anlage nach dem vorstehenden Anspruch, **dadurch gekennzeichnet, dass** der Temperatursensor (6) konfiguriert ist, um die Temperatur der Außenfläche (1a) des ersten Behälters (1) zu messen.

**3.** Anlage nach einem der vorstehenden Ansprüche, **dadurch gekennzeichnet, dass** der Temperatursensor (6) konfiguriert ist, um die Temperatur durch Kontakt mit dem ersten Behälter (1) zu messen.

**4.** Anlage nach einem der vorstehenden Ansprüche, **dadurch gekennzeichnet, dass** der Temperatursensor (6) konfiguriert ist, um Temperaturwerte des ersten Behälters (1) fernzuübertragen, vorzugsweise durch Radiowellen.

**5.** Anlage nach einem der vorstehenden Ansprüche, **dadurch gekennzeichnet, dass** der Temperatursensor (6) auf der Außenseite des ersten Behälters (1) angebracht ist, vorzugsweise der Temperatursensor (6) in einem Haftstreifen lokalisiert ist.

**6.** Anlage nach einem der vorstehenden Ansprüche, **dadurch gekennzeichnet, dass** der Temperatursensor (6) vom Typ Flüssigkristallthermometer ist.

**7.** Anlage nach einem der Ansprüche 1 oder 2, **dadurch gekennzeichnet, dass** der Temperatursensor (6) vom Typ Infrarotthermometer ist.

**8.** Anlage nach einem der vorstehenden Ansprüche, **dadurch gekennzeichnet, dass** die vorbestimmte anfängliche Acetylenmenge in der ersten zweidimensionalen Markierung (5) codiert ist, wobei die elektronische Logik (8) konfiguriert ist, um das Bild des ersten Manometers (2) derart zu bearbeiten, dass die vorbestimmte anfängliche Acetylenmenge decodiert wird.

**9.** Anlage nach einem der vorstehenden Ansprüche, **dadurch gekennzeichnet, dass** die vorbestimmte anfängliche Sauerstoffmenge in der zweiten zweidimensionalen Markierung (25) codiert ist, wobei die elektronische Logik (8) konfiguriert ist, um das Bild des zweiten Manometers (22) derart zu bearbeiten, dass die vorbestimmte anfängliche Sauerstoffmenge decodiert wird.

**10.** Anlage nach einem der Ansprüche 1 bis 7, **dadurch gekennzeichnet, dass** die vorbestimmte anfängliche Acetylenmenge und/oder die vorbestimmte anfängliche Sauerstoffmenge in der elektronischen Logik (8) gespeichert sind.

**11.** Anlage nach einem der vorstehenden Ansprüche, **dadurch gekennzeichnet, dass** sie einen Schneidbrenner umfasst, umfassend eine erste Versorgungsleitung in fluidischer Verbindung mit dem ersten Behälter (1), der Acetylen enthält, eine zweite Versorgungsleitung in fluidischer Verbindung mit dem zweiten Behälter (21), der Sauerstoff enthält, und eine Düse, die fluidisch mit dem ersten und zweiten Durchgang verbunden ist, wobei die Düse derart konfiguriert ist, dass sie einen vorbestimmten Durchsatz eines Sauerstoff-Acetylen-Gemischs, wenn der Schneidbrenner versorgt wird, über die erste Versorgungsleitung mit einem ersten bestimmten Acetylendruck, und wenn der Schneidbrenner versorgt wird, über die zweite Versorgungsleitung mit einem zweiten bestimmten Sauerstoffdruck verteilt.

**12.** Anlage nach dem vorstehenden Anspruch, **dadurch gekennzeichnet, dass** die elektronische Logik (8) konfiguriert ist, um eine erste Acetylenautonomiedauer in Abhängigkeit vom vorbestimmten Durchsatz des Sauerstoff-Acetylen-Gemischs, vom erste Acetylendruck und von der Acetylenrestmenge im ersten Behälter (1) zu bestimmen, und um eine zweite Sauerstoffautonomiedauer in Abhängigkeit vom vorbestimmten Durchsatz des Sauerstoff-Acetylen-Gemischs, vom zweiten Sauerstoffdruck und von der Sauerstoffrestmenge im zweiten Behälter (2) zu bestimmen.

**13.** Anlage nach dem vorstehenden Anspruch, **dadurch gekennzeichnet, dass** die elektronische Logik (8) konfiguriert ist, um die erste Acetylenautonomiedauer mit der zweiten Sauerstoffautonomiedauer zu vergleichen und die kürzere der ersten und zweiten Dauer als Zeitautonomie der Anlage zu bestimmen.

**14.** Verfahren, um die Autonomie einer Anlage nach einem der Ansprüche 1 bis 13 zu bestimmen, wobei das Verfahren die folgenden Schritte umfasst:

a) Erzeugen eines Bildes des ersten Manometers (2) und Bearbeiten des Bildes derart, dass die Winkelposition der ersten Druckanzeige (4) mit Bezug auf die erste zweidimensionale Markierung (5) bestimmt wird,

b) Ableiten, von der Winkelposition der ersten Druckanzeige (4), des Druckwerts, gemessen vom ersten Manometer (2),

c) Erzeugen eines Bildes des zweiten Manometers (22) und Bearbeiten des Bildes derart, dass die Winkelposition der zweiten Druckanzeige (24) mit Bezug auf die zweite zweidimensionale Markierung (25) bestimmt wird,

d) Ableiten, von der Winkelposition der zweiten Druckanzeige (24), des Druckwerts, gemessen vom zweiten Manometer (22),

e) Messen der Temperatur des ersten Behälters (1),

f) Bestimmen einer vorbestimmten anfänglichen Acetylenmenge,

g) Bestimmen einer vorbestimmten anfänglichen Sauerstoffmenge,

h) Behandeln der Daten, erhalten in Schritt b), e) und f), derart, dass die Acetylenrestmenge im ersten Behälter (1) bestimmt wird, und

i) Bearbeiten der Daten, erhalten in Schritt d) und g), derart, dass die Sauerstoffrestmenge im zweiten Behälter (21) bestimmt wird.

15. Verfahren nach Anspruch 14, **dadurch gekennzeichnet, dass** im Laufe von Schritt b) das Bild des ersten Manometers (2) derart bearbeitet wird, dass eine vorbestimmte anfängliche Acetylenmenge, die in der ersten zweidimensionalen Markierung (5) und/oder im Laufe von Schritt g) codiert wurde, decodiert wird, das Bild des zweiten Manometers (22) derart bearbeitet wird, dass eine vorbestimmte anfängliche Sauerstoffmenge, die in der zweiten zweidimensionalen Markierung (25) codiert wurde, decodiert wird.

16. Verfahren nach einem der Ansprüche 14 oder 15, **dadurch gekennzeichnet, dass** es weiter einen Schritt des Speicherns innerhalb der elektronischen Logik (8) der folgenden Daten umfasst:

- einen Wert des Durchsatzes des Sauerstoff-Acetylen-Gemischs, das von der Düse eines Schneidbrenners verteilt wurde,
- einen Wert eines ersten Versorgungsdrucks des Schneidbrenners mit Acetylen; und
- einen Wert eines zweiten Versorgungsdrucks des Schneidbrenners mit Sauerstoff,

wobei die elektronische Logik (8) konfiguriert ist, um eine erste Acetylenautonomiedauer in Abhängigkeit von den Werten des vorbestimmten Durchsatzes des Sauerstoff-Acetylen-Gemischs, vom ersten Acetylendruck und von der Acetylenrestmenge im ersten Behälter (1) zu bestimmen, und um eine zweite Sauerstoffautonomiedauer in Abhängigkeit vom vorbestimmten Durchsatz des Sauerstoff-Acetylen-Gemischs, vom zweiten Sauerstoffdruck und von der Sauerstoffrestmenge im zweiten Behälter (2) zu bestimmen.

17. Verfahren nach Anspruch 16, **dadurch gekennzeichnet, dass** es weiter die folgenden Schritte umfasst:

- Vergleichen der ersten Acetylenautonomie mit der zweiten Sauerstoffautonomie und
- Bestimmen der kürzeren der ersten und zweiten Dauer als Zeitautonomie der Anlage.

18. Verfahren nach Anspruch 17, **dadurch gekennzeichnet, dass** als Begrenzungsgas bestimmt wird:

- Acetylen, wenn die erste Acetylenautonomie geringer als die zweite Sauerstoffautonomiedauer ist, oder
- Sauerstoff, wenn die erste Acetylenautonomie größer als die zweite Sauerstoffautonomiedauer ist.

**Claims**

1. Oxyacetylene-type work apparatus comprising:

- a first container (1) containing acetylene,
- a first manometer (2) to measure the pressure in the first container (1), said first manometer (2) comprising a first dial (3) and a first pressure indicator (4) rotationally movable with respect to said first dial (3),
- a first two-dimensional marking (5) arranged on the first dial (3), said first pressure indicator (4) being able to occupy several angular positions with respect to said first marking (5) depending on the value of the pressure in the first container (1),

- a second container (21) containing oxygen,

- a second manometer (22) to measure the pressure in the second container (21), said second manometer (22) comprising a second dial (23) and a second pressure indicator (24) rotationally movable with respect to said first dial (23),

- a second two-dimensional marking (25) arranged on the second dial (23), said second pressure indicator (24) being able to occupy several angular positions with respect to said second marking (25), depending on the value of the pressure in the second container (21),

- a device for taking images (7) configured to take images of the first manometer (1) and of the second manometer (2),

- an electronic logic circuit (8) configured to process said images of the first and second manometers (1, 2) in order to determine the respective angular positions of the first and second pressure indicators (4) with respect to the first and second two-dimensional markings (5, 25) and to deduce, from said angular positions, the pressure values measured by the first and second manometers (2, 22) respectively,

**characterised in that**:

- the apparatus further comprises a sensor (6) for the temperature of the first container (1) of acetylene,

the electronic logic circuit (8) being configured to:

- determine, based on a predetermined initial quantity of acetylene in the first container (1), on the value of the temperature of the first container (1) measured by the sensor (6) and on the value of the pressure measured by the first manometer (2), the residual quantity of acetylene in the first container (1), and
- determine, based on a predetermined initial quantity of oxygen in the second container (21) and on the value of the pressure measured by the second manometer (22), the residual quantity of oxygen in the second container (21).

2.  Apparatus according to the preceding claim, **characterised in that** the temperature sensor (6) is configured to measure the temperature of the external surface (1a) of the first container (1).

3.  Apparatus according to any one of the preceding claims, **characterised in that** the temperature sensor (6) is configured to measure the temperature by contact with the first container (1).

4.  Apparatus according to any one of the preceding claims, **characterised in that** the temperature sensor (6) is configured to remotely transmit, preferably by radio waves, the temperature values of the first container (1).

5.  Apparatus according to any one of the preceding claims, **characterised in that** the temperature sensor (6) is affixed on the external surface of the first container (1), preferably the temperature sensor (6) is located on an adhesive strip.

6.  Apparatus according to any one of the preceding claims, **characterised in that** the temperature sensor (6) is of the liquid crystal thermometer type.

7.  Apparatus according to any of the claims 1 or 2, **characterised in that** the temperature sensor (6) is of the infrared thermometer type.

8.  Apparatus according to any one of the preceding claims, **characterised in that** said predetermined initial quantity of acetylene is encoded in the first two-dimensional marking (5), the electronic logic circuit (8) being configured to process the image of the first manometer (2) so as to decode said predetermined initial quantity of acetylene.

9.  Apparatus according to any one of the preceding claims, **characterised in that** said predetermined initial quantity of oxygen is encoded in the second two-dimensional marking (25), the electronic logic circuit (8) being configured to process the image of the second manometer (22) so as to decode said predetermined initial quantity of oxygen.

10. Apparatus according to any of claims 1 to 7, **characterised in that** said predetermined initial quantity of acetylene and/or said predetermined initial quantity of oxygen are stored in the electronic logic circuit (8).

11. Apparatus according to any one of the preceding claims, **characterised in that** it comprises a blowtorch comprising a first supply duct fluidly communicating with the first container (1) containing acetylene, a second supply duct fluidly communicating with the second container (21) containing oxygen, and a nozzle fluidly connected to said first and second passages, said nozzle being configured to dispense a predetermined flow of an oxygen-acetylene mixture when the blowtorch is supplied, through the first supply duct, with a first given acetylene pressure and when the blowtorch is supplied, through the second supply duct, with a second given oxygen pressure.

12. Apparatus according to the preceding claim, **characterised in that** the electronic logic circuit (8) is configured to determine a first acetylene working time based on the predetermined flow of the oxygen-acetylene mixture, on said first acetylene pressure, and on said residual quantity of acetylene in the first container (1), and to determine a second oxygen working time based on the predetermined flow of the oxygen-acetylene mixture, on said second oxygen pressure and on the residual quantity of oxygen in the second container (2).

13. Apparatus according to the preceding claim, **characterised in that** the electronic logic circuit (8) is configured to compare the first acetylene working time with the second oxygen working time and to determine which of first and second times is the shortest and corresponds to working time of the apparatus.

14. Method for determining the working time of an apparatus according to any of claims 1 to 13, said method comprising the following steps:

a) an image of the first manometer (2) is taken and said image is processed to determine the angular position of the first pressure indicator (4) with respect to the first two-dimensional marking (5),
b) the value of the pressure measured by the first manometer (2) is deduced from the angular position of the first pressure indicator (4),
c) an image of the second manometer (22) is taken and said image is processed to determine the angular position of the second pressure indicator (24) with respect to the second two-dimensional marking (25),
d) the value of the pressure measured by the second manometer (22) is deduced from the angular position of the second pressure indicator (24),
e) the temperature of the first container (1) is measured,
f) a predetermined initial quantity of acetylene is determined,
g) a predetermined initial quantity of oxygen is determined,
h) the data obtained at steps b), e) and f) is processed to determine the residual quantity of acetylene in the first container (1), and
i) the data obtained at steps d) and g) is processed to determine the residual quantity of oxygen in the second container (21).

15. Method according to claim 14, **characterised in that**, during step b), the image of the first manometer (2) is processed so as to decode a predetermined initial quantity of acetylene encoded in the first two-dimensional marking (5) and/or, during step g), the image of the second manometer (22) is processed so as to decode a predetermined initial quantity of oxygen encoded in the second two-dimensional marking (25).

16. Method according to any of claims 14 or 15, **characterised in that** it further comprises a step whereby the following data are stored in the electronic logic circuit (8):

- a value of the flow of the oxygen-acetylene mixture dispensed by the nozzle of a blowtorch,
- a first acetylene supply pressure value to the blowtorch, and
- a second oxygen supply pressure value to the blowtorch,

the electronic logic circuit (8) being configured to determine a first acetylene working time based on the predetermined flow values of the oxygen-acetylene mixture, on the first acetylene pressure and on the residual quantity of acetylene in the first container (1), and to determine a second oxygen working time based on the predetermined flow of the oxygen-acetylene mixture, on said second oxygen pressure and on the residual quantity of oxygen in the second container (2).

17. Method according to claim 16, **characterised in that** it further comprises the following steps:

- the first acetylene working time is compared with the second oxygen working time, and
- the shortest of said first and second working times is determined to be the working time of the apparatus.

18. Method according to claims 17, **characterised in that** is determined as a limiting gas:

- acetylene if the first acetylene working time is shorter than the second oxygen working time, or
- oxygen if the first acetylene working time is longer than the second oxygen working time.

Figure 1

Figure 2

Figure 3

Figure 4

Figure 5

Figure 6A

Figure 6B

Figure 6C

Figure 6D

Image du premier manomètre — 100

600 — Décodage du premier marqueur bidimensionnel

Traitement image — 200

Position indicateur — 300

700

500 — Température

Quantité initiale Q100-1

Pression P1 — 400

800 — Quantité résiduelle Q1

Figure 7

Image du deuxième manomètre — 900

1300 — Décodage du deuxième marqueur bidimensionnel

Traitement image — 1000

Position indicateur — 1100

1400

Quantité initiale Q100-2

Pression P2 — 1200

1500 — Quantité résiduelle Q2

Figure 8

Figure 9

Image du deuxième manomètre — 900

Image du premier manomètre — 100

1300 — Décodage du deuxième marqueur bidimensionnel

Traitement image — 1000

600 — Décodage du premier marqueur bidimensionnel

Traitement image — 200

Position indicateur — 1100

Position indicateur — 300

1400 — Quantité initiale Q100-2

Pression P2 — 1200

500 — Température

700 — Quantité initiale Q100-1

Pression P1 — 400

1500 — Quantité résiduelle Q2

1600 — Débit de mélange $O_2$ - $C_2H_2$

800 — Quantité résiduelle Q1

1700

Pression d'alimentation $C_2H_2$

Pression d'alimentation $O_2$

1800

Première durée d'autonomie $C_2H_2$

Deuxième durée d'autonomie $O_2$

1900

Affichage « $C_2H_2$ » si première durée < deuxième durée
Affichage « $O_2$ » si première durée > deuxième durée

**EP 3 380 817 B1**

## RÉFÉRENCES CITÉES DANS LA DESCRIPTION

**Documents brevets cités dans la description**

- WO 2015136207 A
- WO 2005093377 A
- EP 2700467 A2
- FR 2873644 A